# EUROPÄISCHE PATENTSCHRIFT

(11) **EP 3 098 452 B1**
(45) Veröffentlichungstag und Bekanntmachung des Hinweises auf die Patenterteilung: **16.10.2019**
(21) Anmeldenummer: 16160651.2
(22) Anmeldetag: 16.03.2016
(51) Int. Cl.: F04D 17/12, F04D 29/02, F04D 29/056, F04D 29/28, F16C 32/06

(54) **TURBOMASCHINE**
TURBO ENGINE
TURBOMACHINE

(30) Priorität: 27.05.2015 DE 102015209682
(43) Veröffentlichungstag der Anmeldung: 30.11.2016
(73) Patentinhaber: ROBERT BOSCH GMBH, 70442 Stuttgart (DE)
(72) Erfinder: Clay, Alister, 35102 Lohra (DE)

(56) Entgegenhaltungen:
- EP-A1- 1 205 678
- GB-A- 2 108 595
- US-A- 3 612 628
- US-A1- 2008 273 990
- US-B1- 6 231 302

## Beschreibung

### Stand der Technik

### Offenbarung der Erfindung

Die Erfindung betrifft eine Turbomaschine gemäß Patentanspruch 1.

Aus DE 10 2011 001 530 A1 ist eine Turbomaschine mit einem ersten und einem zweiten Radiallaufrad bekannt. Die Radiallaufräder sind drehbar gelagert.

Ferner sind aus der US 2008/0273990 A1, GB 2 108 595 A, US 3,612,628 und US 6,231,302 B1 verschiedene Ausgestaltungen von Turbomaschinen bekannt.

Es ist Aufgabe der Erfindung, eine verbesserte Turbomaschine bereitzustellen.

Diese Aufgabe wird mittels einer Turbomaschine gemäß Patentanspruch 1 gelöst. Vorteilhafte Ausführungsformen sind in den abhängigen Ansprüchen angegeben.

Erfindungsgemäß wurde erkannt, dass eine verbesserte Turbomaschine dadurch bereitgestellt werden kann, dass die Turbomaschine wenigstens einen Rotor und einen Stator umfasst, wobei der Rotor drehbar um eine Drehachse mittels einer Lagereinrichtung gelagert ist, wobei der Rotor ein erstes Radiallaufrad umfasst, wobei das erste Radiallaufrad eine erste Schaufelanordnung und eine einstückig und materialeinheitlich mit der ersten Schaufelanordnung ausgebildete erste Abstützanordnung umfasst, wobei die Lagereinrichtung eine erste Lagerschale mit einer ersten Lagerfläche umfasst, wobei die Lagereinrichtung an der ersten Abstützanordnung auf einer zur ersten Schaufelanordnung abgewandten Seite eine zweite Lagerfläche umfasst, wobei zwischen der ersten Lagerfläche und der zweiten Lagerfläche ein erster Spalt vorgesehen ist, wobei die erste Lagerfläche und die zweite Lagerfläche über ein im ersten Spalt vorhandenes Fluid zur Lagerung des Rotors miteinander in Wirkverbindung stehen.

Dadurch können die Toleranzen des Radiallaufrads in Verbindung mit der Lagereinrichtung gering gehalten werden, sodass die Turbomaschine einen besonders hohen Wirkungsgrad aufweist.

In einer weiteren Ausführungsform ist die erste Lagerfläche in einer ersten Drehebene zu der Drehachse angeordnet, wobei die zweite Lagerfläche in einer zweiten Drehebene zu der Drehachse angeordnet ist, wobei der erste Spalt axial zwischen der ersten Lagerfläche und der zweiten Lagerfläche angeordnet ist und in radialer Richtung verläuft.

Erfindungsgemäß weist das erste Radiallaufrad einen ersten Wellenabschnitt auf. Der erste Wellenabschnitt ist axial neben der ersten Abstützanordnung auf einer der ersten Schaufelanordnung abgewandten Seite angeordnet. Die erste Lagerschale weist eine in Umfangsrichtung verlaufende dritte Lagerfläche auf. Die Lagereinrichtung weist an dem ersten Wellenabschnitt umfangsseitig eine vierte Lagerfläche auf. Radial zwischen der dritten Lagerfläche und der vierten Lagerfläche ist ein in axialer Richtung verlaufender zweiter Spalt vorgesehen, wobei der zweite Spalt vorzugsweise fluidisch mit dem ersten Spalt verbunden ist. Auf diese Weise wird durch die Lagereinrichtung sowohl eine axiale als auch eine radiale Lagerung des ersten Radiallaufrads sichergestellt. Ferner wird durch diese Ausgestaltung eine Bauteilanzahl der Turbomaschine besonders niedrig gehalten, sodass die Turbomaschine besonders kostengünstig hergestellt werden kann.

Erfindungsgemäß ist der erste Wellenabschnitt einstückig und materialeinheitlich mit der ersten Abstützanordnung und der ersten Schaufelanordnung ausgebildet. Dadurch können Bauteiltoleranzen besonders niedrig gehalten werden, sodass ein Verluststrom vom Fluid innerhalb der Turbomaschine über den ersten und zweiten Spalt besonders gering ist.

In einer weiteren Ausführungsform ist die dritte Lagerfläche axial angrenzend an die erste Lagerfläche angeordnet. Dadurch kann das Radiallaufrad besonders kompakt ausgebildet werden.

In einer weiteren Ausführungsform erstreckt sich die erste Lagerfläche im Wesentlichen in radialer Richtung von dem ersten Wellenabschnitt bis zu einem radial außen liegenden Ende der ersten Abstützanordnung. Dadurch können besonders hohe axiale Kräfte aus dem ersten Radiallaufrad über die Lagereinrichtung abgestützt werden.

In einer weiteren Ausführungsform umfasst der Rotor ein zweites Radiallaufrad. Das zweite Radiallaufrad ist drehmomentschlüssig mit dem ersten Radiallaufrad gekoppelt. Das zweite Radiallaufrad umfasst eine zweite Schaufelanordnung und eine einstückig und materialeinheitlich mit der zweiten Schaufelanordnung ausgebildete zweite Abstützanordnung. Die zweite Abstützanordnung ist auf einer der ersten Abstützanordnung zugewandten Seite des zweiten Radiallaufrads angeordnet. Die Lagereinrichtung umfasst eine zweite Lagerschale mit einer in einer dritten Drehebene zu der Drehachse angeordneten fünften Lagerfläche. Die Lagereinrichtung umfasst eine an der zweiten Abstützanordnung, auf einer zur ersten Abstützanordnung zugewandten Seite, in einer vierten Drehebene zu der Drehachse angeordnete sechste Lagerfläche. Zwischen der fünften Lagerfläche und der sechsten Lagerfläche ist ein in radialer Richtung verlaufender dritter Spalt vorgesehen. Dadurch kann eine axiale Position der beiden Radiallaufräder über die beiden Radiallaufräder selbst festgelegt werden.

In einer weiteren Ausführungsform ist der dritte Spalt fluidisch mit dem zweiten Spalt verbunden.

In einer weiteren Ausführungsform weist die Turbomaschine einen Verbindungskanal auf. Das zweite Radiallaufrad ist stromaufwärtsseitig mit einer Niederdruckseite und stromabwärtsseitig mit dem Verbindungskanal verbunden. Stromaufwärtsseitig ist das erste Radiallaufrad mit dem Verbindungskanal und stromabwärtsseitig mit einer Hochdruckseite fluidisch verbunden. Das zweite Radiallaufrad ist ausgebildet, das Fluid von der Niederdruckseite in den Verbindungskanal zu fördern und einen Druck des Fluids auf ein erstes Druckniveau anzuheben. Das erste Radiallaufrad ist ausgebildet, das Fluid von dem Verbindungskanal zu der Hochdruckseite zu fördern und das Fluid auf ein zweites Druckniveau anzuheben. Die Spalten sind ausgebildet, den Teil des Fluids von der Hochdruckseite hin zu dem ersten Druckniveau entlang der Lagerflächen zu führen. Dadurch wird eine Kühlung der Lagerflächen erzielt.

In einer weiteren Ausführungsform weist das zweite Radiallaufrad einen zweiten Wellenabschnitt auf. Der zweite Wellenabschnitt ist axial neben der zweiten Abstützanordnung auf einer dem ersten Radiallaufrad zugewandten Seite angeordnet. Der zweite Wellenabschnitt ist einstückig und materialeinheitlich mit der zweiten Abstützanordnung und der zweiten Schaufelanordnung ausgebildet. Der Rotor weist eine Verbindungswelle auf. Die Verbindungswelle ist axial zumindest teilweise zwischen dem ersten Wellenabschnitt und dem zweiten Wellenabschnitt angeordnet und verbindet drehmomentschlüssig den ersten Wellenabschnitt mit dem zweiten Wellenabschnitt.

In einer weiteren Ausführungsform weist der erste Wellenabschnitt und/oder der zweite Wellenabschnitt eine Aufnahme und die Verbindungswelle an wenigstens einem Längsende einen Verbindungswellenabschnitt auf. Der Verbindungswellenabschnitt greift in die Aufnahme ein und koppelt den ersten und/oder den zweiten Wellenabschnitt mit der Verbindungswelle. Vorzugsweise ist die Aufnahme axial auf Höhe der vierten Lagerfläche angeordnet.

In einer weiteren Ausführungsform weist die erste Lagerschale und das erste Radiallaufrad einen identischen Werkstoff auf. Zusätzlich oder alternativ weist die erste Lagerschale und/oder das erste Radiallaufrad einen der folgenden Werkstoffe auf: Hartmetall, Keramik.

In einer weiteren Ausführungsform ist die Lagereinrichtung als Fluidlager, insbesondere als dynamisches Fluidlager, ausgebildet ist.

Nachfolgend wird die Erfindung anhand von Figuren näher erläutert. Dabei zeigen:
Figur 1 einen Halblängsschnitt durch eine Turbomaschine; und
Figur 2 einen Ausschnitt des in Figur 1 gezeigten Halblängsschnitts durch die Turbomaschine.

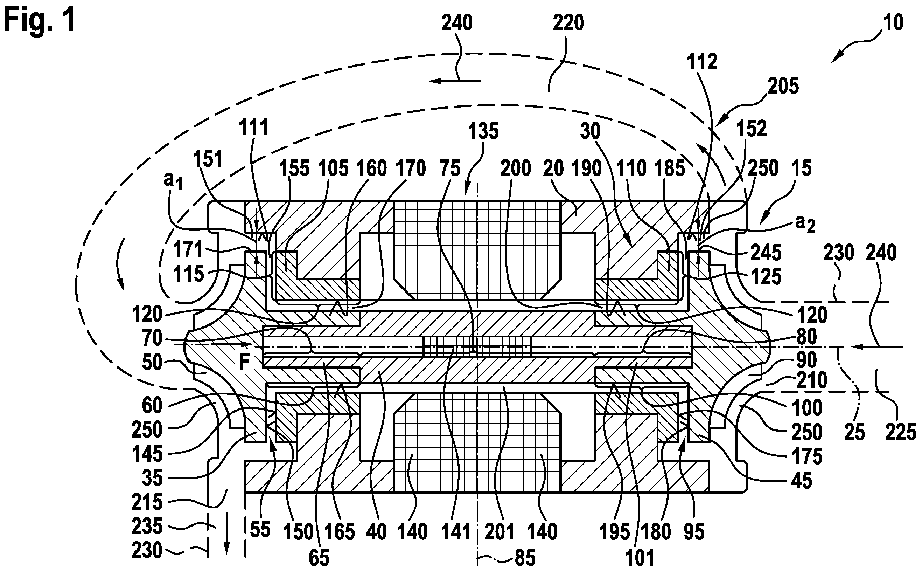

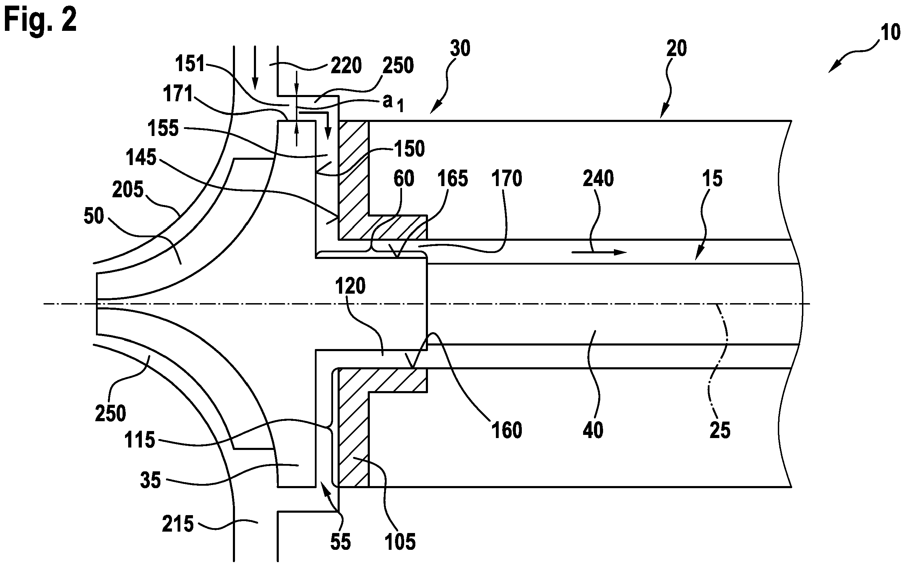

Figur 1 zeigt einen Halblängsschnitt durch eine Turbomaschine 10. Figur 2 zeigt einen Ausschnitt der in Figur 1 gezeigten Turbomaschine 10. Die Turbomaschine 10 ist in der Ausführungsform als Verdichter für einen Wärmepumpenkreislauf ausgebildet. Die Turbomaschine 10 ist aber auch als Turbokompressor, Turbolader oder als Mikrogasturbine oder als Closed-Cycle-Mikrogasturbine ausbildbar. Auch ist denkbar, dass die Turbomaschine 10 in einem (Block-) Heizkraftwerk zur Strom- und/oder Wärmeerzeugung montiert ist.

Die Turbomaschine 10 weist einen Rotor 15 und einen Stator 20 auf. Der Rotor 15 ist drehbar um eine Drehachse 25 mittels einer Lagereinrichtung 30 an dem Stator 20 gelagert.

Der Rotor 15 weist ein erstes Radiallaufrad 35, eine Verbindungswelle 40 und ein zweites Radiallaufrad 45 auf.

Das erste Radiallaufrad 35 umfasst eine erste Schaufelanordnung 50, eine erste Abstützanordnung 55 und einen ersten Wellenabschnitt 60. Die erste Abstützanordnung 55 ist axial angrenzend an die erste Schaufelanordnung 50 angeordnet. Die erste Abstützanordnung 95 weist ein erstes radial äußeres Ende 171 auf. Axial neben der ersten Abstützanordnung 55, auf einer zur ersten Schaufelanordnung 50 abgewandten Seite, ist der erste Wellenabschnitt 60 angeordnet. Die erste Schaufelanordnung 50, die erste Abstützanordnung 55 und der erste Wellenabschnitt 60 sind einstückig und materialeinheitlich ausgebildet. Dadurch kann ein insbesondere mechanisch und thermisch stabiles erstes Radiallaufrad 35 bereitgestellt werden.

Im ersten Wellenabschnitt 60 weist das erste Radiallaufrad 35 eine erste Aufnahme 65 auf. Im Bereich der ersten Aufnahme 65 ist der erste Wellenabschnitt 60 hohlwellenartig ausgebildet. In der Ausführungsform erstreckt sich die erste Aufnahme 65 im Wesentlichen axial über die gesamte axiale Breite des ersten Wellenabschnitts 60. Selbstverständlich ist auch denkbar, dass die erste Aufnahme 65 axial breiter oder schmaler als in Figur 1 gezeigt ausgebildet ist.

Die Verbindungswelle 40 weist einen ersten Verbindungswellenabschnitt 70, einen zweiten Verbindungswellenabschnitt 75 und einen dritten Verbindungswellenabschnitt 80 auf. Der erste Verbindungswellenabschnitt 70 ist axial angrenzend an den zweiten Verbindungswellenabschnitt 75 angeordnet. Der dritte Verbindungswellenabschnitt 80 ist axial angrenzend an den zweiten Verbindungswellenabschnitt 75 auf einer zum ersten Verbindungswellenabschnitt 70 gegenüberliegenden Seite des zweiten Verbindungswellenabschnitts 75 angeordnet. Der erste Verbindungswellenabschnitt 70 ist radial außenseitig korrespondierend zu der ersten Aufnahme 65 ausgebildet und greift in die erste Aufnahme 65 und koppelt die Verbindungswelle 40 drehmomentschlüssig mit dem ersten Radiallaufrad 35. Die Kopplung kann form- und/oder stoffschlüssig erfolgen. In der Ausführungsform ist ein Durchmesser des ersten Wellenabschnitts 60 im Wesentlichen identisch zu einem Durchmesser des zweiten Verbindungswellenabschnitts 70.

Das zweite Radiallaufrad 45 ist spiegelsymmetrisch zu einer Symmetrieebene 85, die senkrecht zu Drehachse 25 ausgerichtet ist, ausgebildet. Selbstverständlich ist auch denkbar, dass das erste Radiallaufrad 35 und das zweite Radiallaufrad 45 asymmetrisch zueinander ausgebildet sind.

Das zweite Radiallaufrad 45 weist eine zweite Schaufelanordnung 90, eine zweite Abstützanordnung 95 und einen zweiten Wellenabschnitt 100 auf. Der zweite Wellenabschnitt 100 und die zweite Abstützanordnung 95 sind auf einer zur ersten Abstützanordnung 55 zugewandten Seite des zweiten Radiallaufrads 45 angeordnet. Die zweite Abstützanordnung 95 weist ein zweites radial äußeres Ende 245 auf. Die zweite Schaufelanordnung 90 ist axial angrenzend zu der zweiten Abstützanordnung 95 auf einer zur ersten Abstützanordnung 55 abgewandten Seite angeordnet. Die zweite Schaufelanordnung 90, die zweite Abstützanordnung 95 und der zweite Wellenabschnitt 100 sind einstückig und materialeinheitlich ausgebildet. Dadurch kann ein insbesondere mechanisch und thermisch stabiles zweites Radiallaufrad 45 bereitgestellt werden. Dabei weisen in der Ausführungsform beispielhaft das erste Radiallaufrad 35 und das zweite Radiallaufrad 45 den gleichen Werkstoff auf. Selbstverständlich ist auch denkbar, dass das erste Radiallaufrad 35 einen unterschiedlichen Werkstoff zu dem zweiten Radiallaufrad 45 aufweist. In dem zweiten Wellenabschnitt 100 weist das zweite Radiallaufrad 45 eine zweite Aufnahme 101 auf. Die zweite Aufnahme 101 ist korrespondierend zu dem dritten Verbindungswellenabschnitt 80 der Verbindungswelle 40 ausgebildet. Dabei greift der dritte Verbindungswellenabschnitt 80 in die zweite Aufnahme 101 ein und koppelt drehmomentschlüssig das zweite Radiallaufrad 45 mit der Verbindungswelle 40. Die Kopplung kann form- und/oder stoffschlüssig erfolgen.

Die Lagereinrichtung 30 ist als Fluidlager, insbesondere als gasdynamisches Fluidlager, ausgebildet und weist eine erste Lagerschale 105 und eine zweite Lagerschale 110 auf. Die Lagerschalen 105, 110 sind buchsenartig ausgebildet. Dabei weist die erste Lagerschale 105 einen ersten Radialabschnitt 115 und einen ersten Axialabschnitt 120 auf. Die zweite Lagerschale 110 weist einen zweiten Radialabschnitt 125 und einen zweiten Axialabschnitt 130 auf. Der erste Radialabschnitt 115 erstreckt sich senkrecht zu der Drehachse 25 und grenzt an den ersten Axialabschnitt 120 an. Dabei ist der erste Radialabschnitt 115 kragenförmig gegenüber dem ersten Axialabschnitt 120 ausgebildet.

Dabei werden die Lagerschalen 105, 110 durch den Stator 20 mechanisch getragen. Der Stator 20 weist radial außenseitig der Lagerschalen 105, 110 auf einer jeweils der anderen Lagerschale 105 abgewandten Seite eine innere Umfangsfläche 111, 112 auf. Zwischen einer ersten inneren Umfangsfläche 111 und dem ersten radial äußeren Ende 171 ist ein Einlaufspalt 151 vorgesehen, der in radialer Richtung eine Breite a₁ aufweist, vorgesehen. Zwischen einer zweiten inneren Umfangsfläche 112 und dem zweiten radial äußeren Ende 245 ist ein Austrittsspalt 152 vorgesehen, der in radialer Richtung eine Breite a₂ aufweist, vorgesehen.

Der zweite Radialabschnitt 125 ist senkrecht der Drehachse 25 angeordnet und grenzt an den zweiten Axialabschnitt 130 an. Dabei ist der zweite Radialabschnitt kragenförmig zu dem zweiten Axialabschnitt 130 ausgebildet. Der erste Axialabschnitt 120 und der zweite Axialabschnitt 130 sind hohlzylindrisch ausgebildet. Axial zwischen der ersten Lagerschale 105 und der zweiten Lagerschale 110 ist ein Antriebsmotor 135 vorgesehen. Selbstverständlich ist auch denkbar, dass auf den Antriebsmotor 135 verzichtet wird. Der Antriebsmotor 135 ist in der Ausführungsform als elektrische Maschine ausgebildet. Der Antriebsmotor 135 weist dabei Wicklungen 140 auf, die in dem Stator 20 angeordnet sind. Die elektrische Maschine 135 weist wenigstens einen Permanentmagneten 141 auf. Der Permanentmagnet 141 ist dabei drehmomentschlüssig mit dem zweiten Verbindungswellenabschnitt 75 der Verbindungswelle 40 verbunden.

Die erste Lagerschale 105 weist am ersten Radialabschnitt 115 eine erste Lagerfläche 145 auf. Die erste Lagerfläche 145 ist dabei in einer ersten Drehebene, die senkrecht zur Drehachse 25 angeordnet ist, angeordnet. In der Ausführungsform erstreckt sich die erste Lagerfläche 145 im Wesentlichen in radialer Richtung von dem ersten Wellenabschnitt 60 bis zu einem radial außen liegenden Ende 171 des ersten Radiallaufrads 35. Selbstverständlich ist auch denkbar, dass die erste Lagerfläche 145 in radialer Richtung schmaler ausgebildet ist.

Ferner weist die Lagereinrichtung 30 an der ersten Abstützanordnung 55, auf einer zur ersten Schaufelanordnung 50 abgewandten Stirnseite, eine in einer zweiten Drehebene zu der Drehachse 25 angeordnete zweite Lagerfläche 150 auf. Zwischen der ersten Lagerfläche 145 und der zweiten Lagerfläche 150 ist ein in radialer Richtung verlaufender erster Spalt 155 vorgesehen. Der erste Spalt 155 ist fluidisch mit dem Einlaufspalt 151 verbunden.

An einer inneren Umfangsfläche des ersten Axialabschnitts 120 weist die erste Lagerschale 105 eine in Umfangsrichtung verlaufende dritte Lagerfläche 160 auf. Ferner umfasst die Lagereinrichtung 30 an dem ersten Wellenabschnitt 60 an einer äußeren Umfangsfläche eine vierte Lagerfläche 165. Radial zwischen der dritten Lagerfläche 160 und der vierten Lagerfläche 165 ist ein in axialer Richtung verlaufender zweiter Spalt 170 vorgesehen. Der zweite Spalt 170 ist dabei fluidisch mit dem ersten Spalt 155 verbunden. In der Ausführungsform grenzt die dritte Lagerfläche 160 direkt an die erste Lagerfläche 145 an. Selbstverständlich ist auch denkbar, dass die dritte Lagerfläche 160 beabstandet zu der zweiten Lagerfläche 150 angeordnet ist.

Die zweite Lagerschale 110 weist am zweiten Radialabschnitt 125 eine fünfte Lagerfläche 175 auf. Die fünfte Lagerfläche 175 ist dabei in einer dritten Drehebene zu der Drehachse 25 angeordnet. Ferner weist die Lagereinrichtung 30 an der zweiten Abstützanordnung 95 eine sechste Lagerfläche 180 auf. Die sechste Lagerfläche 180 ist in einer vierten Drehebene zu der Drehachse 25 angeordnet. Dabei ist zwischen der fünften Lagerfläche 175 und der sechsten Lagerfläche 180 ein in radialer Richtung verlaufender dritter Spalt 185 vorgesehen.

Der zweite Axialabschnitt 130 weist an einer inneren Umfangsfläche eine siebte Lagerfläche 190 auf. Der zweite Wellenabschnitt 100 weist an einer äußeren Umfangsfläche eine achte Lagerfläche 195 auf. Die siebte Lagerfläche 190 und die achte Lagerfläche 195 verlaufen in Umfangsrichtung. Dabei ist zwischen der siebten Lagerfläche 190 und der achten Lagerfläche 195 ein vierter Spalt 200 vorgesehen. Der vierte Spalt 200 verbindet fluidisch den zweiten Spalt 170 fluidisch mit dem dritten Spalt 185. Der zweite und vierte Spalt 170, 200 sind hierbei als Ringspalt ausgebildet, während hingegen der erste und dritte Spalt 155, 185 als Radialspalt ausgebildet sind. Ferner kann axial zwischen dem zweiten und vierten Spalt 170, 200 wenigstens beispielhaft ein weiterer Spalt 201 vorgesehen sein, der unterschiedlichen zu den Spalten 155, 170, 185, 200 ausgebildet ist.

Die Turbomaschine 10 weist ein Gehäuse 205 auf. Das Gehäuse 205 weist einen Einlass 210, einen Auslass 215 und in der Ausführungsform beispielhaft einen Verbindungskanal 220 auf. Der Einlass 210 ist dabei beispielsweise mit einer Niederdruckseite 225 eines Wärmepumpenkreislaufs 230 verbindbar. Der Auslass 215 ist fluidisch mit einer Hochdruckseite 235 des Wärmepumpenkreislaufs 230 verbindbar. Der Wärmepumpenkreislauf 230 weist in der Turbomaschine ein beispielhaft gasförmiges Fluid 240 10 als Wärmeträgermedium auf. Es wird darauf hingewiesen, dass das Fluid 240 auch ein Gas- Flüssigkeits-Gemisch und/oder ein Gas-Festkörpergemisch sein kann. Das zweite Radiallaufrad 45 ist stromaufwärtsseitig über den Einlass 210 mit der Niederdruckseite 225 fluidisch verbunden. Stromabwärtsseitig ist das zweite Radiallaufrad 45 mit dem Verbindungskanal 220 verbunden. Das erste Radiallaufrad 35 ist stromaufwärtsseitig mit dem Verbindungskanal 220 und stromabwärtsseitig über den Auslass 215 mit der Hochdruckseite 235 des Wärmepumpenkreislaufs 230 verbunden.

Wird dem Antriebsmotor 135 (elektrische) Energie zugeführt, so versetzt der Antriebsmotor 135 den Rotor 15 in Rotation. Dadurch saugt das zweite Radiallaufrad 45 über den Einlass 210 aus der Niederdruckseite 225 das Gas 240 an und fördert es radial nach außen hin. Dabei wird das Fluid 240 auf ein erstes Druckniveau verdichtet. Mit dem ersten Druckniveau strömt das Fluid 240 stromabwärtsseitig von dem zweiten Radiallaufrad 45 in den Verbindungskanal 220. Das Fluid 240 wird über den Verbindungskanal 220 von dem zweiten Radiallaufrad 45 zum ersten Radiallaufrad 35 geführt. Dabei wird das Fluid 240 radial innen der ersten Schaufelanordnung 50 zugeführt. Die erste Schaufelanordnung 50 verdichtet radial nach außen hin das Fluid 240 und verdichtet das Fluid 240 vom ersten Druckniveau auf ein zweites Druckniveau. Radial außen strömt das Fluid 240 von dem zweiten Radiallaufrad 45 über den Auslass 215 in die Hochdruckseite 235 des Wärmepumpenkreislaufs 230.

Das Fluid 240 dient auch zur Lagerung des Rotors 15. Das Fluid 240 strömt radial außenseitig zwischen dem Gehäuse 205 und dem radial äußeren Ende 171 des ersten Radiallaufrads 35 in den ersten Spalt 155 ein. Das Fluid 240 strömt radial von außen nach innen im ersten Spalt 155. Vom ersten Spalt 155 strömt das Fluid 240 in den zweiten Spalt 170. Durch die Ausgestaltung der Lagereinrichtung 30 als Fluidlager bildet das Fluid 240 im ersten und zweiten Spalt 155, 170 jeweils ein Polster aus, so dass die erste Lagerfläche 145 axial beabstandet zu der zweiten Lagerfläche 150 und die dritte Lagerfläche 160 radial beabstandet zu der vierten Lagerfläche 165 ist. Dadurch wird ein Berührkontakt zwischen den Lagerflächen 145, 150, 160, 165 vermieden.

Das Fluid 240 strömt entlang des zweiten Spalts 170 und entlang einer Längsrichtung der Verbindungswelle 40. Das Fluid 240 strömt vom zweiten Spalt 170 in den weiteren Spalt 201. Das Fluid 240 strömt entlang des Antriebsmotors 135 und kühlt hierbei insbesondere die Wicklungen 140. Nach Passieren des Antriebsmotors 135 strömt das Fluid 240 vom weiteren Spalt 201 in den vierten Spalt 200 ein. Dabei bildet im vierten Spalt 200 das Fluid 240 ein weiteres Polster aus, so dass die achte Lagerfläche 195 beabstandet zu der siebten Lagerfläche 190 rotiert. Dadurch wird ein Verschleiß zwischen dem zweiten Wellenabschnitt 100 und der zweiten Lagerschale vermieden.

Vom vierten Spalt 200 strömt das Fluid 240 in den dritten Spalt 185 und strömt radial von innen nach außen hin. Im dritten Spalt 185 bildet das Fluid ein weiteres Polster zwischen der fünften und sechsten Lagerfläche 175, 180 aus. An dem radial äußeren zweiten Ende 245 des zweiten Radiallaufrads 45 tritt das Fluid 240 über den Austrittsspalt 152 stromabwärtsseitig des zweiten Radiallaufrads 45 aus dem dritten Spalt 185 aus. Durch den Druckunterschied zwischen Eintritt in den ersten Spalt 155 und Austritt aus dem dritten Spalt 185 strömt das Fluid 240 entlang des eben beschrieben Strömungsweges über die Spalte 155, 170, 185, 200, 201. Durch die Expansion des Fluids 240 vom zweiten Druckniveau hin zum ersten Druckniveau kühlt das Fluid 240 sowohl die Lagereinrichtung 30 als auch den Antriebsmotor 135. Ferner sorgt das Fluid 240 durch die Polsterbildung zwischen den Lagerflächen 145, 150, 160, 165, 175, 180, 190, 195 für einen berührungslosen Lauf der Radiallaufräder 35, 45, sodass sowohl ein axiales als auch ein radiales Anschlagen der Lagerflächen 145, 150, 160, 165, 175, 180, 190, 195 aneinander vermieden wird.

Besonders gute Anlaufeigenschaften, also wenn beispielsweise die Lagerflächen 145, 150, 160, 165, 175, 180, 190, 195 einen Berührkontakt aneinander aufweisen und/oder, wenn das Fluid 240 noch nicht hinreichend starke Polsterbildung aufweist, werden erzielt, wenn das Radiallaufrad 35, 45 und die Lagerschale 105, 110 einen identischen Werkstoff aufweisen. Dabei ist von besonderem Vorteil, wenn die Lagerschale 105, 110 und das Radiallaufrad 35, 45 Hartmetall und/oder Keramik aufweist.

Ferner wird durch die oben beschriebene Anordnung der Spalte 155, 170, 185, 200 sichergestellt, dass, insbesondere eine durch den Druckunterschied des Fluides 240 am ersten Radiallaufrad 35 zum zweiten Radiallaufrad 45 eine vom ersten Radiallaufrad 35 in Richtung der Drehachse 25 zum zweiten Radiallaufrad 45 wirkende Axialkraft F über den ersten Spalt 155 an der ersten Lagerschale 105 abgestützt werden kann. Dadurch wird ein Anschlagen des ersten Radiallaufrads 35 an der ersten Lagerschale 105 vermieden.

Die oben beschriebene Ausgestaltung der Turbomaschine 10 hat den Vorteil, dass der Rotor 15 beidseitig der als Fluidlager ausgebildeten Lagereinrichtung 30 im Betrieb der Turbomaschine 10 berührungslos gelagert werden kann, so dass ein Taumeln des Rotors 15 vermieden werden kann. Ferner wird beim Anfahren und im Stillstand der Turbomaschine 10 eine sichere Positionierung des Rotors 15 dadurch gewährleistet, dass die Lagereinrichtung 30 in diesem Zustand als Gleitlager fungiert. Insbesondere können die Lagerschalen 105, 110 ferner axial weit voneinander beabstandet angeordnet werden, so dass eine zuverlässige Abstützung des Rotors 15 gewährleistet ist. Ferner ermöglicht die Anordnung der ersten und zweiten Lagerschale 105, 110 im Stator 20, dass der Stator 20 einstückig und materialeinheitlich ausgebildet werden kann. Ferner wird eine Inspektions- und Servicezuverlässigkeit für die Turbomaschine 10 verbessert.

Durch die oben beschriebene Ausgestaltung können der Eintrittsspalt 151 und der Austrittsspalt 152 zwischen dem Stator 20 und dem Radiallaufrad 35, 45, aber auch ein Freiraum 250 zwischen der Schaufelanordnung 50, 90 und dem Gehäuse 205 besonders gering gehalten werden. Dabei können die Breite a₁ und/oder die Breite a₂ kleiner 50 µm, insbesondere kleiner 10 µm, gewählt werden. Dadurch kann ein Wirkungsgrad der Turbomaschine 10 verbessert werden. Insbesondere kann durch die geringe Breite a₁, a₂ eine Verbesserung der Zuverlässigkeit der Turbomaschine 10 erzielt werden.

Ferner werden durch die einstückige und materialeinheitliche Ausgestaltung des Radiallaufrads 35, 40 werden innerhalb des Radiallaufrads 35, 45 Toleranzketten vermieden. Dadurch kann eine Bauteiltoleranz des Rotors 15 in einer Größenordnung einer Lagertoleranz der Lagereinrichtung 30 gewählt werden. Insbesondere kann die Breite a₁, a₂ in radialer Richtung korrespondierend zur Lagertoleranz gewählt werden, sodass die Breite a₁, a₂ eine gleiche Größenordnung wie die Lagertoleranz der Lagereinrichtung 30 aufweist. Ferner ist ein Transfer von üblicherweise bei der Montage der Radiallaufräder 35, 45 sich aufsummierenden Toleranzketten auf die Breite a₁, a₂ und den Freiraum 250 nicht notwendig. Ferner ist die Turbomaschine 10 besonders einfach ausgebildet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Turbomaschine (10) mit wenigstens einem Rotor (15) und einem Stator (20),
- wobei der Rotor (15) drehbar um eine Drehachse (25) mittels einer Lagereinrichtung (30) gelagert ist,
- wobei der Rotor (15) ein erstes Radiallaufrad (35) umfasst,
- wobei das erste Radiallaufrad (35) eine erste Schaufelanordnung (50) und eine einstückig und materialeinheitlich mit der ersten Schaufelanordnung (50) ausgebildete erste Abstützanordnung (55) umfasst,
- wobei die Lagereinrichtung (30) eine erste Lagerschale (105) mit einer ersten Lagerfläche (145) umfasst,
- wobei die Lagereinrichtung (30) an der ersten Abstützanordnung (55) auf einer zur ersten Schaufelanordnung (50) abgewandten Seite eine zweite Lagerfläche, (150) umfasst,
- wobei zwischen der ersten Lagerfläche (145) und der zweiten Lagerfläche (150) ein erster Spalt (155) vorgesehen ist,
- wobei die erste Lagerfläche (145) und die zweite Lagerfläche (150) über ein im ersten Spalt (155) vorhandenes Fluid (240) zur Lagerung des Rotors (15) miteinander in Wirkverbindung stehen,
- wobei das erste Radiallaufrad (35) einen ersten Wellenabschnitt (60) aufweist,
- wobei der erste Wellenabschnitt (60) axial neben der ersten Abstützanordnung (55) auf einer der ersten Schaufelanordnung (50) abgewandten Seite angeordnet ist
- wobei das erste Radiallaufrad (35) eine erste Aufnahme (65) im ersten Wellenabschnitt (60) aufweist, wobei im Bereich der ersten Aufnahme (65) der erste Wellenabschnitt (60) hohlwellenartig ausgebildet ist und sich die erste Aufnahme (65) im Wesentlichen axial über die gesamte axiale Breite des ersten Wellenabschnitts (60) erstreckt,
- wobei die erste Lagerschale (105) eine in Umfangsrichtung verlaufende dritte Lagerfläche (160) umfasst,
- wobei die Lagereinrichtung (30) an dem ersten Wellenabschnitt (60) umfangsseitig eine vierte Lagerfläche (165) umfasst,
- wobei radial zwischen der dritten Lagerfläche (160) und der vierten Lagerfläche (165) ein in axialer Richtung verlaufender zweiter Spalt (170) vorgesehen ist,
- wobei der zweite Spalt (170) vorzugsweise fluidisch mit dem ersten Spalt (155) verbunden ist,
- wobei der Rotor (15) eine Verbindungswelle (40) umfasst,
- wobei die Verbindungswelle (40) einen ersten Verbindungswellenabschnitt (70), einen zweiten Verbindungswellenabschnitt (75) und einen dritten Verbindungswellenabschnitt (80) aufweist,
- wobei der erste Verbindungswellenabschnitt (70) an einem Längsende der Verbindungswelle (40) und axial angrenzend an den zweiten Verbindungswellenabschnitt (75) angeordnet ist,
- wobei der dritte Verbindungswellenabschnitt (80) axial angrenzend an den zweiten Verbindungswellenabschnitt (75) auf einer zum ersten Verbindungswellenabschnitt (70) gegenüberliegenden Seite des zweiten Verbindungswellenabschnitts (75) angeordnet ist,
- **dadurch gekennzeichnet, dass**
- der erste Wellenabschnitt (60) einstückig und materialeinheitlich mit der ersten Abstützanordnung (55) und der ersten Schaufelanordnung (50) ausgebildet ist,
- wobei der erste Verbindungswellenabschnitt (70) radial außenseitig korrespondierend zu der ersten Aufnahme (65) ausgebildet ist und in die erste Aufnahme (65) eingreift und die Verbindungswelle (40) drehmomentschlüssig mit dem ersten Radiallaufrad (35) koppelt,
- wobei ein äußerer Durchmesser des ersten Wellenabschnitts (60) im Wesentlichen identisch zu einem äußeren Durchmesser des zweiten Verbindungswellenabschnitts ist (70).

2. Turbomaschine (10) nach Anspruch 1,
- wobei die erste Lagerfläche (145) in einer ersten Drehebene zu der Drehachse (25) angeordnet ist,
- wobei die zweite Lagerfläche (150) in einer zweiten Drehebene zu der Drehachse (25) angeordnet ist,
- wobei der erste Spalt (155) axial zwischen der ersten Lagerfläche (145) und der zweiten Lagerfläche (150) angeordnet ist und in radialer Richtung verläuft.

3. Turbomaschine (10) nach Anspruch 1 oder 2, wobei die dritte Lagerfläche (160) angrenzend an die erste Lagerfläche (145) angeordnet ist.

4. Turbomaschine (10) nach einem der Ansprüche 1 bis 3, wobei die erste Lagerfläche (145) sich im Wesentlichen in radialer Richtung von dem ersten Wellenabschnitt (60) bis zu einem radial außen liegenden Ende (171) der ersten Abstützanordnung (55) erstreckt.

5. Turbomaschine (10) nach einem der Ansprüche 1 bis 4,
- wobei der Rotor (15) ein zweites Radiallaufrad (45) umfasst,
- wobei das zweite Radiallaufrad (45) drehmomentschlüssig mit dem ersten Radiallaufrad (35) gekoppelt ist,
- wobei das zweite Radiallaufrad (45) eine zweite Schaufelanordnung (90) und eine einstückig und materialeinheitlich mit der zweiten Schaufelanordnung (90) ausgebildete zweite Abstützanordnung (95) umfasst,
- wobei die zweite Abstützanordnung (95) auf einer der ersten Abstützanordnung (55) zugewandten Seite des zweiten Radiallaufrads (45) angeordnet ist,
- wobei die Lagereinrichtung (30) eine zweite Lagerschale (110) mit einer in einer dritten Drehebene zu der Drehachse (25) angeordneten fünften Lagerfläche (175) umfasst,
- wobei die Lagereinrichtung (30) eine an der zweiten Abstützanordnung (95) auf einer zur ersten Abstützanordnung (55) zugewandten Seite in einer vierten Drehebene zu der Drehachse (25) angeordnete sechste Lagerfläche (180) umfasst,
- wobei zwischen der fünften Lagerfläche (175) und der sechsten Lagerfläche (180) ein in radialer Richtung verlaufender dritter Spalt (185) vorgesehen ist.

6. Turbomaschine (10) nach Anspruch 5, wobei der dritte Spalt (185) mit dem zweiten Spalt (170) fluidisch verbunden ist.

7. Turbomaschine (10) nach Anspruch 5 oder 6,
- aufweisend einen Verbindungskanal (220),
- wobei das zweite Radiallaufrad (45) stromaufwärtsseitig mit einer Niederdruckseite (225) und stromabwärtsseitig mit dem Verbindungskanal (220) verbunden ist,
- wobei stromaufwärtsseitig das erste Radiallaufrad (35) mit dem Verbindungskanal (220) verbunden und stromabwärtsseitig mit einer Hochdruckseite (235) fluidisch verbunden ist,
- wobei das zweite Radiallaufrad (45) ausgebildet ist, das Fluid (240) von der Niederdruckseite (225) in den Verbindungskanal (220) zu fördern und einen Druck des Fluids (240) auf ein erstes Druckniveau anzuheben,
- wobei das erste Radiallaufrad (35) ausgebildet ist, das Fluid (240) von dem Verbindungskanal (220) zu der Hochdruckseite (235) zu fördern und das Fluid auf ein zweites Druckniveau anzuheben,
- wobei die Spalten (155, 170, 185, 200) ausgebildet sind, den Teil des Fluids (240) von der Hochdruckseite (235) hin zu dem ersten Druckniveau entlang der Lagerflächen (145, 150, 160, 165, 175, 180, 190, 195) zu führen.

8. Turbomaschine (10) nach einem der Ansprüche 5 bis 7,
- wobei das zweite Radiallaufrad (45) einen zweiten Wellenabschnitt (100) aufweist,
- wobei der zweite Wellenabschnitt (100) axial neben der zweiten Abstützanordnung (95) auf einer dem erstem Radiallaufrad (35) zugewandten Seite angeordnet ist,
- der zweite Wellenabschnitt (100) einstückig und materialeinheitlich mit der zweiten Abstützanordnung (95) und der zweiten Schaufelanordnung (90) ausgebildet ist,
- wobei der Rotor (15) eine Verbindungswelle (40) umfasst,
- wobei die Verbindungswelle (40) axial zumindest teilweise zwischen dem ersten Wellenabschnitt (60) und dem zweiten Wellenabschnitt (100) angeordnet ist und drehmomentschlüssig den ersten Wellenabschnitt (60) mit dem zweiten Wellenabschnitt (100) verbindet.

9. Turbomaschine (10) nach Anspruch 8,
- wobei der der zweite Wellenabschnitt (100) eine weitere Aufnahme (101) und die Verbindungswelle (40) an wenigstens einem Längsende den dritten Verbindungswellenabschnitt (80) aufweist,
- wobei der dritte Verbindungswellenabschnitt (80) in die weitere Aufnahme (101) eingreift und den zweiten Wellenabschnitt (100) mit der Verbindungswelle (40) koppelt,
- wobei vorzugsweise die Aufnahme (65, 101) zumindest teilweise axial auf Höhe der vierten Lagerfläche (165) angeordnet ist.

10. Turbomaschine (10) nach Anspruch 9,
- wobei die erste Lagerschale (105) und das erste Radiallaufrad (35) einen identischen Werkstoff aufweisen,
- und/oder
- wobei die erste Lagerschale (105) und/oder das erste Radiallaufrad (35) einen der folgenden Werkstoffe aufweisen: Hartmetall, Keramik.

11. Turbomaschine (10) nach einem der Ansprüche 1 bis 10, wobei die Lagereinrichtung (30) als Fluidlager, insbesondere als dynamisches Fluidlager, ausgebildet ist.

## Claims

1. Turbomachine (10) having at least one rotor (15) and a stator (20),
- wherein the rotor (15) is mounted by means of a bearing device (30) so as to be rotatable about an axis of rotation (25),
- wherein the rotor (15) comprises a first radial impeller (35),
- wherein the first radial impeller (35) comprises a first blade arrangement (50) and a first supporting arrangement (55) which is formed in one piece and as a single material with the first blade arrangement (50),
- wherein the bearing device (30) comprises a first bearing shell (105) having a first bearing surface (145),
- wherein the bearing device (30) comprises a second bearing surface (150) on the first supporting arrangement (55) on a side facing away from the first blade arrangement (50),
- wherein a first gap (155) is provided between the first bearing surface (145) and the second bearing surface (150),
- wherein the first bearing surface (145) and the second bearing surface (150) are operatively connected to one another via a fluid (240) present in the first gap (155) for the purpose of mounting the rotor (15),
- wherein the first radial impeller (35) has a first shaft portion (60),
- wherein the first shaft portion (60) is arranged axially next to the first supporting arrangement (55) on a side facing away from the first blade arrangement (50),
- wherein the first radial impeller (35) has a first receptacle (65) in the first shaft portion (60), wherein the first shaft portion (60) is designed in the manner of a hollow shaft in the region of the first receptacle (65), and the first receptacle (65) extends substantially axially over the entire axial width of the first shaft portion (60),
- wherein the first bearing shell (105) comprises a third bearing surface (160) extending in the circumferential direction,
- wherein the bearing device (30) comprises, circumferentially, a fourth bearing surface (165) on the first shaft portion (60),
- wherein a second gap (170) extending in the axial direction is provided radially between the third bearing surface (160) and the fourth bearing surface (165),
- wherein the second gap (170) is preferably fluidically connected to the first gap (155),
- wherein the rotor (15) comprises a connecting shaft (40),
- wherein the connecting shaft (40) has a first connecting shaft portion (70), a second connecting shaft portion (75) and a third connecting shaft portion (80),
- wherein the first connecting shaft portion (70) is arranged on a longitudinal end of the connecting shaft (40) and axially adjoining the second connecting shaft portion (75),
- wherein the third connecting shaft portion (80) is arranged axially adjoining the second connecting shaft portion (75) on a side of the second connecting shaft portion (75) that is situated opposite to the first connecting shaft portion (70),
- **characterized in that**
- the first shaft portion (60) is formed in one piece and as a single material with the first supporting arrangement (55) and the first blade arrangement (50),
- wherein the first connecting shaft portion (70) is formed radially on the outer side in a corresponding manner to the first receptacle (65) and engages in the first receptacle (65) and couples the connecting shaft (40) to the first radial impeller (35) in a torque-transmitting manner,
- wherein an outer diameter of the first shaft portion (60) is substantially identical to an outer diameter of the second connecting shaft portion (70).

2. Turbomachine (10) according to Claim 1,
- wherein the first bearing surface (145) is arranged in a first plane of rotation with respect to the axis of rotation (25),
- wherein the second bearing surface (150) is arranged in a second plane of rotation with respect to the axis of rotation (25),
- wherein the first gap (155) is arranged axially between the first bearing surface (145) and the second bearing surface (150) and extends in the radial direction.

3. Turbomachine (10) according to Claim 1 or 2, wherein the third bearing surface (160) is arranged adjoining the first bearing surface (145).

4. Turbomachine (10) according to one of Claims 1 to 3, wherein the first bearing surface (145) extends substantially in a radial direction from the first shaft portion (60) to a radially outer end (171) of the first supporting arrangement (55).

5. Turbomachine (10) according to one of Claims 1 to 4,
- wherein the rotor (15) comprises a second radial impeller (45),
- wherein the second radial impeller (45) is coupled to the first radial impeller (35) in a torque-transmitting manner,
- wherein the second radial impeller (45) comprises a second blade arrangement (90) and a second supporting arrangement (95) which is formed in one piece and as a single material with the second blade arrangement (90),
- wherein the second supporting arrangement (95) is arranged on a side of the second radial impeller (45) that faces the first supporting arrangement (55),
- wherein the bearing device (30) comprises a second bearing shell (110) having a fifth bearing surface (175) arranged in a third plane of rotation with respect to the axis of rotation (25),
- wherein the bearing device (30) comprises a sixth bearing surface (180) arranged on the second supporting arrangement (95) on a side facing the first supporting arrangement (55) in a fourth plane of rotation with respect to the axis of rotation (25),
- wherein a third gap (185) extending in the radial direction is provided between the fifth bearing surface (175) and the sixth bearing surface (180).

6. Turbomachine (10) according to Claim 5, wherein the third gap (185) is fluidically connected to the second gap (170).

7. Turbomachine (10) according to Claim 5 or 6,
- having a connecting duct (220),
- wherein the second radial impeller (45) is connected upstream to a low-pressure side (225) and downstream to the connecting duct (220),
- wherein the first radial impeller (35) is connected upstream to the connecting duct (220) and is fluidically connected downstream to a high-pressure side (235),
- wherein the second radial impeller (45) is designed to convey the fluid (240) from the low-pressure side (225) into the connecting duct (220) and to raise a pressure of the fluid (240) to a first pressure level,
- wherein the first radial impeller (35) is designed to convey the fluid (240) from the connecting duct (220) to the high-pressure side (235) and to raise the fluid to a second pressure level,
- wherein the gaps (155, 170, 185, 200) are designed to guide the part of the fluid (240) from the high-pressure side (235) to the first pressure level along the bearing surfaces (145, 150, 160, 165, 175, 180, 190, 195).

8. Turbomachine (10) according to one of Claims 5 to 7,
- wherein the second radial impeller (45) has a second shaft portion (100),
- wherein the second shaft portion (100) is arranged axially next to the second supporting arrangement (95) on a side facing the first radial impeller (35),
- the second shaft portion (100) is formed in one piece and as a single material with the second supporting arrangement (95) and the second blade arrangement (90),
- wherein the rotor (15) comprises a connecting shaft (40),
- wherein the connecting shaft (40) is arranged axially at least partially between the first shaft portion (60) and the second shaft portion (100) and connects the first shaft portion (60) to the second shaft portion (100) in a torque-transmitting manner.

9. Turbomachine (10) according to Claim 8,
- wherein the second shaft portion (100) has a further receptacle (101), and the connecting shaft (40) has the third connecting shaft portion (80) on at least one longitudinal end,
- wherein the third connecting shaft portion (80) engages in the further receptacle (101) and couples the second shaft portion (100) to the connecting shaft (40),
- wherein preferably the receptacle (65, 101) is arranged at least partially axially at the level of the fourth bearing surface (165).

10. Turbomachine (10) according to Claim 9,
- wherein the first bearing shell (105) and the first radial impeller (35) contain an identical material,
- and/or
- wherein the first bearing shell (105) and/or the first radial impeller (35) contain one of the following materials: hard metal, ceramic.

11. Turbomachine (10) according to one of Claims 1 to 10, wherein the bearing device (30) is designed as a fluid bearing, in particular as a dynamic fluid bearing.

## Revendications

1. Turbomachine (10), comprenant au moins un rotor (15) et un stator (20),
- le rotor (15) étant monté rotatif autour d'un axe de rotation (25) au moyen d'un dispositif formant palier (30),
- le rotor (15) comportant une première roue mobile radiale (35),
- la première roue mobile radiale (35) comportant un premier arrangement d'aubes (50) et un premier arrangement d'appui (55) réalisé d'un seul tenant avec le premier arrangement d'aubes (50) et dans la même matière que celui-ci,
- le dispositif formant palier (30) comportant une première coque de palier (105) dotée d'une première surface d'appui (145),
- le dispositif formant palier (30) comportant une deuxième surface d'appui (150) au niveau du premier arrangement d'appui (55), sur un côté à l'opposé du premier arrangement d'aubes (50),
- un premier interstice (155) se trouvant entre la première surface d'appui (145) et la deuxième surface d'appui (150),
- la première surface d'appui (145) et la deuxième surface d'appui (150) se trouvant en liaison active l'une avec l'autre en vue de supporter le rotor (15) par le biais d'un fluide (240) présent dans le premier interstice (155),
- la première roue mobile radiale (35) possédant une première portion d'arbre (60),
- la première portion d'arbre (60) étant disposée dans le sens axial à côté du premier arrangement d'appui (55) sur un côté à l'opposé du premier arrangement d'aubes (50),
- la première roue mobile radiale (35) possédant un premier logement (65) dans la première portion d'arbre (60), la première portion d'arbre (60) étant configurée en arbre creux dans la zone du premier logement (65) et le premier logement (65) s'étendant sensiblement dans le sens axial sur toute la largeur axiale de la première portion d'arbre (60),
- la première coque de palier (105) comportant une troisième surface d'appui (160) qui s'étend dans la direction périphérique,
- le dispositif formant palier (30) comportant une quatrième surface d'appui (165) sur le côté périphérique au niveau de la première portion d'arbre (60),
- un deuxième interstice (170) qui s'étend dans la direction axiale se trouvant dans le sens radial entre la troisième surface d'appui (160) et la quatrième surface d'appui (165),
- le deuxième interstice (170) étant de préférence en liaison fluidique avec le premier interstice (155),
- le rotor (15) possédant un arbre de liaison (40),
- l'arbre de liaison (40) possédant une première portion d'arbre de liaison (70), une deuxième portion d'arbre de liaison (75) et une troisième portion d'arbre de liaison (80),
- la première portion d'arbre de liaison (70) étant disposée au niveau d'une extrémité longitudinale de l'arbre de liaison (40) et de manière axialement adjacente à la deuxième portion d'arbre de liaison (75),
- la troisième portion d'arbre de liaison (80) étant disposée de manière axialement adjacente à la deuxième portion d'arbre de liaison (75) sur un côté de la deuxième portion d'arbre de liaison (75) opposé à la première portion d'arbre de liaison (70),
**caractérisée en ce que**
- la première portion d'arbre (60) est réalisée d'un seul tenant avec le premier arrangement d'appui (55) et le premier arrangement d'aubes (50) et dans la même manière que ceux-ci,
- la première portion d'arbre de liaison (70) étant configurée, du côté extérieur dans le sens radial, en correspondance avec le premier logement (65) et venant en prise dans le premier logement (65) et accouplant l'arbre de liaison (40) à la première roue mobile radiale (35) en transmission de couple,
- un diamètre extérieur de la première portion d'arbre (60) étant sensiblement identique à un diamètre extérieur de la deuxième portion d'arbre de liaison (70).

2. Turbomachine (10) selon la revendication 1,
- la première surface d'appui (145) étant disposée dans un premier plan de rotation par rapport à l'axe de rotation (25),
- la deuxième surface d'appui (150) étant disposée dans un deuxième plan de rotation par rapport à l'axe de rotation (25),
- le premier interstice (155) étant disposé axialement entre la première surface d'appui (145) et la deuxième surface d'appui (150) et s'étendant dans la direction radiale.

3. Turbomachine (10) selon la revendication 1 ou 2, la troisième surface d'appui (160) étant disposée adjacente à la première surface d'appui (145).

4. Turbomachine (10) selon l'une des revendications 1 à 3, la première surface d'appui (145) se projetant sensiblement dans la direction radiale de la première portion d'arbre (60) jusqu'à une extrémité (171), située à l'extérieur dans le sens radial, du premier arrangement d'appui (55).

5. Turbomachine (10) selon l'une des revendications 1 à 4,
- le rotor (15) comportant une deuxième roue mobile radiale (45),
- la deuxième roue mobile radiale (45) étant accouplée avec la première roue mobile radiale (35) en transmission de couple,
- la deuxième roue mobile radiale (45) comportant un deuxième arrangement d'aubes (90) et un deuxième arrangement d'appui (95), réalisé d'un seul tenant avec le deuxième arrangement d'aubes (90) et dans la même matière que celui-ci,
- le deuxième arrangement d'appui (95) étant disposé sur un côté de la deuxième roue mobile radiale (45) faisant face au premier arrangement d'appui (55),
- le dispositif formant palier (30) comportant une deuxième coque de palier (110) dotée d'une cinquième surface d'appui (175) disposée dans un troisième plan de rotation par rapport à l'axe de rotation (25),
- le dispositif formant palier (30) comportant une sixième surface d'appui (180) disposée au niveau du deuxième arrangement d'appui (95) sur un côté faisant face au premier arrangement d'appui (55) dans un quatrième plan de rotation par rapport à l'axe de rotation (25),
- un troisième interstice (185) qui s'étend dans la direction radiale se trouvant entre la cinquième surface d'appui (175) et la sixième surface d'appui (180).

6. Turbomachine (10) selon la revendication 5, le troisième interstice (185) étant en liaison fluidique avec le deuxième interstice (170).

7. Turbomachine (10) selon la revendication 5 ou 6,
- possédant un canal de liaison (220),
- la deuxième roue mobile radiale (45) étant reliée côté amont à un côté basse pression (225) et côté aval au canal de liaison (220),
- la première roue mobile radiale (35) étant reliée côté amont au canal de liaison (220) et étant reliée fluidiquement côté aval à un côté haute pression (235),
- la deuxième roue mobile radiale (45) étant configurée pour transporter le fluide (240) du côté basse pression (225) dans le canal de liaison (220) et élever une pression du fluide (240) à un premier niveau de pression,
- la première roue mobile radiale (35) étant configurée pour transporter le fluide (240) du canal de liaison (220) au côté haute pression (235) et élever le fluide (240) à un deuxième niveau de pression,
- les interstices (155, 170, 185, 200) étant configurés pour guider la partie du fluide (240) depuis le côté haute pression (235) vers le premier niveau de pression le long des surfaces d'appui (145, 150, 160, 165, 175, 180, 190, 195) .

8. Turbomachine (10) selon l'une des revendications 5 à 7,
- la deuxième roue mobile radiale (45) possédant une deuxième portion d'arbre (100),
- la deuxième portion d'arbre (100) étant disposée dans le sens axial à côté du deuxième arrangement d'appui (95) sur un côté faisant face à la première roue mobile radiale (35),
- la deuxième portion d'arbre (100) étant réalisée d'un seul tenant avec le deuxième arrangement d'appui (95) et le deuxième arrangement d'aubes (90) et dans la même matière que ceux-ci,
- le rotor (15) comportant un arbre de liaison (40),
- l'arbre de liaison (40) étant disposé dans le sens axial au moins partiellement entre la première portion d'arbre (60) et la deuxième portion d'arbre (100) et reliant la première portion d'arbre (60) à la deuxième portion d'arbre (100) en transmission de couple.

9. Turbomachine (10) selon la revendication 8,
- la deuxième portion d'arbre (100) possédant un logement supplémentaire (101) et l'arbre de liaison (40) la troisième portion d'arbre de liaison (80) au niveau d'au moins une extrémité longitudinale,
- la troisième portion d'arbre de liaison (80) venant en prise dans le logement supplémentaire (101) et accouplant la deuxième portion d'arbre (100) à l'arbre de liaison (40),
- le logement (65, 101) étant de préférence disposé au moins partiellement dans le sens axial à la hauteur de la quatrième surface d'appui (165).

10. Turbomachine (10) selon la revendication 9,
- la première coque de palier (105) et la première roue mobile radiale (35) présentant un matériau identique
- et/ou
- la première coque de palier (105) et/ou la première roue mobile radiale (35) présentant l'un des matériaux suivants : métal dur, céramique.

11. Turbomachine (10) selon l'une des revendications 1 à 10, le dispositif formant palier (30) étant réalisé sous la forme d'un palier à fluide, notamment sous la forme d'un palier à fluide dynamique.
